# EUROPEAN PATENT APPLICATION

(11) **EP 4 137 314 A1**
(43) Date of publication of application: **22.02.2023**
(21) Application number: 22190714.0
(22) Date of filing: 17.08.2022
(51) Int. Cl.: B32B 23/08, B32B 23/06, B32B 27/08, B32B 27/10, B32B 27/32, B32B 27/34, B32B 27/30, B32B 29/00

(54) **LAMINATED PACKAGING MATERIAL, AND A METHOD FOR MANUFACTURING**

(30) Priority: 19.08.2021 EP 21192225
(71) Applicant: Tetra Laval Holdings & Finance S.A., 1009 Pully (CH)
(72) Inventor: BERGHOLTZ, Lars, 263 51 HÖGANÄS (SE); TOFT, Nils, 224 72 Lund (SE); ÅBERG, Mi, 222 22 Lund (SE)
(74) Representative: Tetra Pak - Patent Attorneys SE

(57) **Abstract**

A laminated packaging material (16) for packaging of liquid food products (12), a respective manufacturing method and a packaging container (10) are provided. The laminated packaging material (16) comprises a bulk layer (20) of paper or paperboard or other cellulose-based material, a first outermost liquid tight layer (22), arranged on the outside of the bulk layer (20) to constitute the outside of a packaging container (10) formed from the packaging material (16), a second innermost liquid tight layer (24) arranged on the inside of the bulk layer (20) to be in direct contact with the filled food product (12), and an at least proportionately non-metal barrier film or sheet (26) being laminated between the bulk layer (20) and the second, innermost liquid tight layer (24), wherein the bulk layer (20) and the barrier film or sheet (26) together form a main layer (28). The main layer (28) is provided with at least one slit (30) being covered at least by the second innermost liquid tight layer (24).

## Description

### Technical Field

The invention relates to a laminated packaging material for packaging of liquid food products, a method for manufacturing such laminated packaging material, as well as to a packaging container comprising the laminated packaging material.

### Background Art

Packaging containers of the single use disposable type for liquid foods are often produced from a packaging laminate based on paperboard or carton. One such commonly occurring packaging container is marketed under the trademark Tetra Brik Aseptic@ and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, highspeed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous highspeed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

The layer of an aluminium foil in the packaging laminate has been used for many years to provide the desired gas barrier properties and the conventional aluminium-foil based packaging laminate for liquid food aseptic packaging is still the most cost-efficient packaging material, at its level of performance, available on the market today.

However, there is currently a trend growing towards developing laminated packaging materials having no aluminium-foil in the laminated structure, seeking to improve the environmental profile of the resulting material. It is then of course desirable to also lower the costs for manufacturing of the laminated packaging material and keeping the necessary properties for aseptic long-term storage of the packaging containers produced from the laminated packaging material.

Any material to compete with the aluminium foil must be cost-efficient regarding raw materials, have at least comparable food preserving properties and have a comparably low complexity during converting into a finished packaging laminate.

Among the efforts of developing non-aluminium-foil materials for liquid food carton packaging, there is also a general incentive towards developing premanufactured films or sheets having high and multiple barrier functionalities, i.e. not only oxygen or gas barrier but also water vapour, chemical- or aroma-substance barrier properties, which may replace the aluminium-foil barrier material, of the conventional laminated packaging material, and adapt it to the conventional Al-foil process for lamination and manufacturing.

In order to accommodate to the industry needs the present applicant has suggested a range of alternatives for laminated packaging materials without the aluminium foil. For example, in EP3517291 it is suggested to use a barrier film comprising a polyester selected from the group consisting of polyethylene-2,5-furandicarboxylate (PEF) and polytrimethylene furandicarboxylate (PTF), a blend and a co-polymer thereof, coated with a vapour deposited barrier coating comprising a metal or metal oxide. In US11046060 it is disclosed a barrier film comprising a PECVD coating of diamond-like carbon.

While the suggested barrier films and the resulting laminated packaging materials provide promising performance in terms of being environmental friendly, cost efficient, and providing the desired integrity these non-aluminium barrier materials typically exhibit significant differences in penetration capability. Penetration of the barrier film is normally required for laminated packaging materials being intended to be used with straws. Attempts have been made by punching a hole in the bulk or core layer prior to lamination, and then cover the hole on the inside and outside by the additional lamination layers, including the barrier material. By such configuration the consumer does not have to penetrate the bulk or core layer, which significantly reduces the required penetration force. However, pre-punching holes in the bulk or core layer adds complexity to the manufacturing process.

For consumer satisfaction the penetration force should be as low as possible, however in order to prevent unintentional penetration some resistance of the opening structure is required. Consumer surveys have revealed a desired penetration force of around 15 N or less. A penetration force of around 10 to 12 N, has proven to be satisfactory in terms of packaging container integrity and handling. However, laminated packaging materials using alternatives to aluminium foil for the barrier material all require a significantly higher penetration force, such as in the range of 25 N, even if the bulk or core layer is removed as explained above.

In view of this, available technology for laminated packaging materials not using aluminium foil as the barrier film does not allow the use of straws, as the required penetration force is significantly beyond what the consumer finds acceptable.

There is thus a need for an improved laminated packaging material which does not require a barrier consisting of an aluminium foil but at the same time provides a reduced penetration force of the laminated packaging material, so that straws can be used with the final packaging container.

### Summary

It is an object of the invention to at least partly overcome one or more of the above-identified limitations of the prior art. In particular, it is an object to provide a laminated packaging material for packaging of liquid food products that securely encloses the liquid food product, reduces the penetration force required to use a straw with the packaging material, and reduces the amount of metal material comprised by the packaging material.

To solve these objects a laminated packaging material for packaging of liquid food products is provided in a first aspect of the invention. The laminated packaging material comprises a bulk layer of paper or paperboard or other cellulose-based material, a first outermost liquid tight layer, arranged on the outside of the bulk layer to constitute the outside of a packaging container formed from the packaging material, a second innermost liquid tight layer arranged on the inside of the bulk layer to be in direct contact with the filled food product, and a barrier film or sheet being laminated between the bulk layer and the second, innermost liquid tight layer, wherein the bulk layer and the barrier film or sheet together form a main layer.

The barrier film or sheet is an at least proportionately non-metal barrier film or sheet, i.e. the barrier film or sheet is a non-metal barrier film or sheet, or a barrier film or sheet having a metal content of 5 mass percent or less.

According to the laminated packaging material of the invention, the main layer is provided with at least one slit being covered at least by the second liquid tight layer. In some embodiments the slit is covered by the first and second liquid tight layers.

The slit covered at least by the second liquid tight layer, and optionally also by the first liquid tight layer, is advantageous in that the required penetration force, if for example a straw is to be inserted in the area of the slit, is significantly reduced, while protection of the food product packaged by the laminated packaging material of the invention is maintained. The penetration force is in particular decreased to a level very well below 25 N. At the same time, an oxygen transmission rate (OTR) for the part of the package is maintained at a low level, not exceeding 0.002 cm³/part 24h 0,2atm at 23 degrees C and 50% relative humidity). By comprising the at least proportionately non-metal barrier film or sheet, which means in other words that the barrier film or sheet at least partially comprises a non-metal material, the amount of metal in the laminated packaging material is significantly reduced or eliminated. This improves the environmental profile of the laminated packaging material. Due to the slit, another problem could be solved according to that in case of pre-known laminated packaging materials, holes are provided in the bulk layer by a punching action prior to lamination of the inner and outer layers. This process creates punched residuals of the bulk layer in the manufacturing environment, which is used to be referred to as a "confetti problem" in the past. This problem is solved by the slit of the laminated packaging material of the invention, because the material around the slit is only displaced, instead of being stamped out.

The first outermost and/or second innermost liquid tight layers preferably may be heat sealable. Further preferred, the first outermost and/or second innermost liquid tight layers may comprise a thermoplastic material. Preferably, the first outermost and/or second innermost liquid tight layers are heat sealable thermoplastic layers.

The barrier film or sheet may comprise any barrier material that is suitable to maintain a food safe environment for the packaged liquid food product. This covers materials with inherent gas barrier properties, in particular materials forming an oxygen transmission barrier. Such materials for example can be found among polymers, such as in films of ethylene vinyl alcohol, EVOH, or polyamides. Alternatively, a barrier film may comprise a polyolefin-based substrate with a vacuum deposited barrier coating. Vacuum deposited or vapour deposited coatings may be coatings of metals, metal oxides, inorganic oxides, other inorganic compounds or carbon-based coatings, such as amorphous diamond-like carbon, DLC, coatings. However it shall once again be noted that, if the barrier film or sheet comprises a metal material, it partially comprises at least one more non-metal material. It can also consist of a non-metal material completely. Some preferred materials will be described below.

The barrier film or sheet may be a composite material, for example comprising a major amount of non-metal material and a small amount of a metal material. The metal material my in some embodiments provide the advantage of preventing the transmission of light, in order to further protect the product enclosed by the packaging material from the outer environment. Preferably, the amount of metal material is not more than 5 %, further preferred not more than 4 %, further preferred not more than 3 %, even further preferred not more than 2 % and mostly preferred not more than 1 % of the total amount of the composite material. The amount of metal material may refer to a mass or volume amount of the total amount of the composite material, which means it is expressed in mass percent or volume percent, respectively, of the total amount. Preferably, it refers to a mass amount. All intermediate values from the amount of 5 % down to 0 % are also disclosed herein, only limited by the accuracy achievable by known manufacturing processes.

For example, the non-metal material may comprise a plastic, paper or cellulose-based material. For example, the metal material may comprise Aluminum. Other preferred materials will be described further below. The non-metal material may form a substrate which carries a barrier material.

In an embodiment of the laminated packaging material of the invention, the at least one slit extends fully through the main layer. This further reduces the required penetration force to pierce the main layer, for example with a straw.

In an embodiment of the laminated packaging material of the invention, the barrier film or sheet comprises a substrate layer being coated with the barrier material. Such a barrier film or sheet may be one embodiment of the above described composite material.

In an embodiment of the laminated packaging material of the invention, the substrate layer is made of plastic or paper or a cellulose-based material. For example, the substrate layer may be metallized, preferably with Aluminum. Such a metal coating on the substrate layer, for example Aluminum, may have a thickness of 60 nm, for example. The substrate layer may have a thickness of typically 12 µm or more, such as from 12 to 50 µm, depending on the material, the desired application, and machine parameters. In this merely exemplary combination, the amount of metal would typically range considerably lower than1 vol% or thickness % of the barrier film or sheet.

Generally, the barrier film or sheet and, if applicable the coating included in it, may comprise a thin material coating of a vapor deposition coating or a dispersion coating material or a combination of such coatings. The substrate layer may comprise a barrier material, as well, which may be a skin layer or coating of EVOH or a polyamide polymer.

Gas barrier materials or coatings applied by means of coating of aqueous dispersion or solution compositions may comprise polymers which have inherent gas barrier properties, and which are food safe and environmentally sustainable, both regarding recyclability and their application in industrial coating and lamination processes. Such polymers are thus water dispersible and/or dissolvable in water and may be applied by means of an aqueous dispersion coating process or a liquid film coating process. Non-aqueous or only partly aqueous coating compositions, such as those based on alcohols or mixtures of alcohol and water, are also suitable in terms of the invention disclosed herein.

The barrier dispersion coating may comprise a polymer selected from the group consisting of vinyl alcohol polymers and copolymers, such as from the group consisting of polyvinyl alcohol (PVOH) and ethylene vinyl alcohol (EVOH), starch, starch derivatives, nanofibrillar cellulose/ microfibrillar cellulose (NFC/ MFC), nanocrystalline cellulose (NCC) and of blends of two or more thereof.

The barrier dispersion coating may be applied by means of dispersion or solution coating at an amount of from 0.2 to 5 g/m², such as from 0.5 to 4 g/m², such as from 0.5 to 3.5 g/m² or such as from 1 to 3 g/m² referring to the dry weight of the barrier material.

Processes suitable for coating of low-dry content polymer dispersion or solution compositions are broadly any suitable wet coating methods, such as gravure roll coating, air spraying, airless spraying, reverse roll coating, wire bar coating, lip coating, air knife coating, curtain flow coating, spray coating, dip coating, blade coating and brush coating methods.

The barrier dispersion coating compositions may be based on the two most common types of polymers and copolymers suitable for dispersion coating, based on vinyl alcohol monomers, i.e. polyvinyl alcohol (PVOH) and ethylene vinyl alcohol (EVOH).

The gas barrier polymer may preferably be PVOH, because it provides good film formation properties, gas barrier properties, cost efficiency, food compatibility, as well as odor barrier properties.

A PVOH-based gas barrier composition performs best when the PVOH has a degree of saponification of at least 98 %, preferably at least 99 %, although also PVOH with lower degrees of saponification will provide oxygen barrier properties.

On the other hand, EVOH may be advantageous by providing some moisture resistance to the barrier material, since the copolymer comprises ethylene monomer units. The amount of ethylene monomer units depends on the choice of EVOH grade, but its presence will be at the expense of some oxygen barrier property, in comparison to pure PVOH. Conventional EVOH polymers, are normally intended for extrusion and are not possible to disperse or dissolve in an aqueous medium in order to produce a thin liquid film coated barrier film of 3,5 g/m2 or below. Such an EVOH should comprise a rather high amount of vinyl alcohol monomer units to be water-dispersible and the properties should be as close to those of liquid film coating grades of PVOH as possible. An extruded EVOH layer can be incorporated into a polymeric substrate film, preferably as a skin layer onto a polyolefin base film.

A barrier dispersion coating composition may further comprise from about 1 to about 20 weight % of an inorganic laminar compound based on dry coating weight, such as exfoliated nanoclay particles, such as bentonite. Thus, the barrier layer may include from about 99 to about 80 weight % of the polymer based on the dry coating weight.

The barrier dispersion coating may thus be applied at a total amount of from 0.2 to 4 g/m², more preferably from 0.5 to 4 g/m², such as from 0.5 to 3.5 g/m², such as from 1 to 3 g/m², dry weight. Below 0.2 g/m², there will be no gas barrier properties achieved at all, while above 3.5 g/m², the coating will bring less cost-efficiency to the packaging laminate, due to high cost of barrier polymers in general and due to high energy cost for evaporating off the liquid. A recognizable level of oxygen barrier is achieved by PVOH at 0.5 g/m², and above, and a good balance between barrier properties and costs is normally achieved between 0.5 and 3 g/m².

The barrier dispersion coating may be applied in two consecutive steps with intermediate drying, as two part-layers. When applied as two part-layers, each layer is suitably applied in amounts from 0.2 to 2 g/m², preferably from 0.5 to 1.5 g/m², and allows a higher quality total layer from a lower amount of liquid gas barrier composition. More preferably, the two part-layers are applied at an amount of from 0.5 to 1.5 g/m² each.

The substrate may also have, on the surface of its first side, a vapor deposition coating of a gas barrier material selected from metals, metal oxides, inorganic oxides and amorphous diamond-like carbon coatings. The vapor deposition coating may be applied by means of physical vapor deposition (PVD) or chemical vapor deposition (CVD), for example by plasma enhanced chemical vapor deposition (PECVD). It may more specifically be selected from the group consisting of an Aluminum metallization coating and Aluminum oxide, AlOx, applied by a PVD process. Preferably it is an Aluminum metallization coating. A PVD process is used for metal deposition, such as of aluminium or aluminium oxide, AlOx, while amorphous carbon and diamond like carbon depositions are provided by CVD or PECVD processes.

A substrate, such as of paper or a cellulose-based sheet, may have on a first, top-side surface a first dispersion coating of a gas barrier material formed by coating and subsequent drying of a dispersion or solution of an aqueous gas barrier composition, and further a vapor deposition coating of a gas barrier material selected from metals, metal oxides, inorganic oxides and amorphous diamond-like carbon, applied onto the first barrier dispersion coating.

The barrier-coated cellulose-based substrate may thus also be coated with a gas barrier material by means of vapor deposition coating onto its top-side surface to a thickness of from 2 to 80 nm, such as from 2 to 50 nm, such as from 2 to 45 nm.

The vapor deposited barrier coating to be coated onto a top-side surface of a substrate may be applied by means of physical vapor deposition (PVD) or chemical vapor deposition (CVD), for example by plasma enhanced chemical vapor deposition (PECVD). The latter processes are particularly suitable for polymer film substrates, however.

Generally, a thickness below 5 nm the barrier properties may be too low to be useful and at above 200 nm thickness, such as above 100 nm, such as above 50 nm, depending on the type of vapor deposition coating, the barrier coating may be less flexible and, thus, more prone to cracking when applied onto a flexible substrate and would also cost more.

Other examples of vapor deposition coatings are Aluminum oxide (AlOx, Al2O3) and Silicon oxide (SiOx) coatings. Generally, PVD-coatings of such oxides are more brittle and less suitable for incorporation into packaging materials by lamination, while metallized layers as an exception do have suitable mechanical properties for lamination material despite being made by PVD.

Normally, an Aluminum metallized layer inherently has a thin surface portion consisting of an Aluminum oxide due to the nature of the metallization coating process used.

The Aluminum metallized layer may be applied to an optical density (OD) of from 1.8 to 3.0 or even 3.5, such as from 1.8 to 2.5, preferably from 1.9 to 2.2. At an optical density lower than 1.8, the barrier properties of the metallized film may be too low. At above 3.5, such as above 3.0, such as above 2.5, on the other hand, the metallization layer may become brittle, and the thermostability during the metallization process will be low due to higher heat load when metallizing the substrate film during a longer time. The coating quality and adhesion may then be negatively affected.

Other coatings may be applied by means of a plasma enhanced chemical vapor deposition method (PECVD), wherein a vapor of a compound is deposited onto the substrate under more or less oxidizing circumstances. Silicon oxide coatings (SiOx) may, for example, also be applied by a PECVD process, and may then obtain very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to adjacent polymer or adhesive layers in a laminated packaging material. Particularly good adhesion to adjacent polymer layers, are obtained with polyolefins and in particular polyethylene and polyethylene-based co-polymers.

In an embodiment of the laminated packaging material of the invention, the at least one slit does not fully extend through the main layer. In such a case, the slit or dot perforation may extend partly or fully through the bulk layer and the substrate film or sheet layer, such that the layers are weakened, but not through the barrier coating or the skin layer, thus leaving a thin or coated barrier layer intact.

The slit is preferably provided by an action directed to form a material separation rather than removing material. Suitable techniques for providing a slit may e.g. be by means of a laser, cutting using a knife or sharp blade, or applying a spark treatment.

The slit may have different shapes depending on the desired penetration force, and depending on the associated opening device (e.g. paper straw, plastic straw, etc.). Generally, the design of the slit is determined by a trade-off between OTR and penetration force. A minimum OTR would typically require a minimum slit, while a minimum penetration force would require a rather extensive slit. However, a minimum penetration force is typically not desired as a certain amount of penetration force will effectively prevent unintentional opening.

The penetration force is typically exhibiting a sequential dual peak behavior. When penetrating the packaging material with a straw, a first penetration force is required to penetrate the first layer(s) of the packaging material. A second penetration force is then required to push the straw through the slit, causing a deflection of the packaging material around the straw. The popular use of paper-made straws provides additional challenges compared to plastic straws. On one hand the paper straws are not as sharp as plastic straws, thereby requiring a higher first penetration force in order to push through the initial layer(s) of the packaging material. On the other hand the paper-made straws often have a larger diameter as compared to plastic straws, and they may be less prone to compress thereby requiring also a higher second penetration force.

The inventors have realized that in a preferred embodiment, the slit is very narrow in one direction, while extended in another longitudinal, perpendicular direction. The "narrow" dimension is e.g. achieved by a sharp cutting knife, or by a focused laser beam. The longitudinal extension of the slit allows the packaging material, in particular the bulk layer and the barrier film or sheet, to separate sufficiently easy in order to allow the straw to penetrate the packaging material.

The slit may extend in the machine direction. This allows the slit tool to be stationary at least in the longitudinal direction, as the motion of the packaging material will cause the desired extension of the slit.

The slit preferably has the shape of a part-circle, for example quarter-circle, a third of a circle or half-circle, as well as for example two thirds of a circle or a three-quarter circle. The part-circle's diameter preferably corresponds to diameter of a known straw and may for example comprise a diameter of 6 mm. The part-circle, which in other words means a single-interrupted or multiple-interrupted circle, preferably comprises a single interruption in the circular shape of not more than 2 mm or not more than 1 mm in length. The interruption can preferably measure any length between 1mm and 2 mm, as well, that can be manufactured by known methods. Of course, said geometries of the slit are also compatible with the other embodiments described herein.

In an embodiment of the laminated packaging material of the invention, the main layer is provided with at least two intersecting slits. This significantly reduces the required penetration force, compared to a single slit. Alternatively, there could be a plurality of non-intersecting slits, as well, for example of a perforation type.

In an embodiment of the laminated packaging material of the invention, the slits are in the form of a cross. This has been identified as a particularly beneficial design that decreases the required penetrations force down to a level of about 10 N, while the OTR for the part of the package does not exceed 0.002 cm³/part 24h 0,2atm.

Further, each slit of the cross may be angled relative a longitudinal extension of the laminated packaging material. Regarding the longitudinal extension it shall be understood, that the laminated packaging material is normally manufactured in a continuous process that has a material feed direction, also referred to as a manufacturing direction or machine direction. The longitudinal extension of the laminated packaging material is herein defined as parallel to the machine direction. However, it should be noted that the longitudinal extension of the laminated packaging material may be oriented 90° in relation to the longitudinal extension of the final packaging container; in some cases the area of the web of laminated packaging material intended to form a single packaging container is oriented such that the intended longitudinal extension of the final packaging container is aligned with the cross-machine direction, i.e. perpendicular to the machine direction.

When producing the cross, a respective cutting tool needs to depart from the machine direction as it moves relative the work piece. Thus, the faster the laminated packaging material is moved in the production process, the higher are control requirements to adapt the movement of the cutting tool relative the machine direction to create for example a slit extending transverse the machine direction. This makes it more difficult to manufacture a symmetric cross comprising for example one slit transverse the manufacturing direction (which means at an angle of 90 degrees) and one intersecting slit parallel the machine direction (which means at an angle of 0 degrees). However, if both slits are angled relative the machine direction, for example each at 45 degrees, the control requirements for the movement of the cutting tool relative the machine direction to manufacture these slits is reduced. At the same time, a symmetric cross can be manufactured, for example with both slits intersecting perpendicularly, which means in an X-type of form.

In an embodiment, the slits may be in the form of an Y. This has been identified as another preferable shape, reducing the required penetration force down to a level of about 14 N, while the OTR for the part of the packaging container does not exceed 0.002 cm³/part 24h 0,2atm.

Further, the slit may be in the form of a single straight line. This is particularly reducing the manufacturing effort and achieves a required penetration well below 25 N, which means for example around 21 N. At the same time, the OTR for the part of the packaging container does not exceed 0.002 cm³/part 24h 0,2atm and could be experimentally reduced down to a level not exceeding 0.001 cm³/part 24h 0,2atm.

In an embodiment, the barrier film or sheet is a gas barrier film or sheet, preferably an oxygen barrier film or sheet.

Another aspect of the invention refers to a method of manufacturing a laminated packaging material for packaging of liquid food products. The method may in particular correspond to the inventive laminated packaging material described herein and therefore implies all method related aspects disclosed with regard to that laminated packaging material, as well as the other way around.

The method of the invention comprises the following steps:
- providing a bulk layer of paper or paperboard or other cellulose-based material,
- laminating an at least proportionately non-metal barrier film or sheet to said bulk layer such that the barrier film or sheet and the bulk layer form a main layer,
- providing the main layer with at least one slit, and
- laminating a first outermost liquid tight layer on the outside of the bulk layer to constitute the outside of a packaging container formed from the packaging material, and
- laminating a second innermost liquid tight layer on the inside of the barrier film or sheet to be in direct contact with the filled food product, such that the second liquid tight layer covers the at least one slit of the main layer.

An at least proportionately non-metal barrier film or sheet should in this context be interpreted as a non-metal barrier film or sheet, or a barrier film or sheet having a relatively small metal content, such as of 5 mass percent or less.

In an embodiment of the method of the invention, the first outermost and second innermost liquid tight layers are laminated such that the first outermost liquid tight layer as well as the second innermost liquid tight layer cover the at least one slit of the main layer.

In the case when also the outermost liquid tight layer is cut through by the slit or perforation, the latter may be coated locally after the formation of a packaging container in the filling machine, such as by an aqueous dispersion of a barrier polymer, such as PVOH, EVOH or PA.

In an embodiment of the method of the invention, the step of laminating the barrier film or sheet to the bulk layer is performed by extrusion lamination or wet lamination.

Other than in previously known laminated packaging materials, in particular those comprising pre-punched holes in the bulk layer, the step of laminating the barrier film or sheet to the bulk layer is performed before the slit is created in the inventive method. Thus, a material added in the extrusion lamination or wet lamination process, such as a glue, is not passing through the barrier film or sheet or the bulk layer. This effectively prevents a pollution of the respective manufacturing equipment, such as nip rollers used for lamination.

In an embodiment of the method of the invention, a further step comprises printing a decor layer on the outside of the bulk layer prior to providing the main layer with the at least one slit. This effectively avoids that any printing material enters the slit.

In an embodiment of the method of the invention, the step of providing the main layer with at least one slit is performed by laser cutting, and/or by mechanical cutting.

Both variants are particularly efficient, if a single slit is provided in the manufacturing direction. Laser cutting is particularly suitable to efficiently create one or more slits of a flexible geometry. Mechanical cutting, for example by a rotating knife or perforation knife, can be done at low technical effort.

In an embodiment of the method of the invention, the at least one slit extends at least to some extent in the longitudinal direction of the laminated packaging material. This significantly decreases the manufacturing effort, as stated above with regard to the laminated packaging material of the invention. It is particularly advantageous, if the manufacturing process is a continuous process.

Another aspect of the invention refers to a packaging container, comprising the laminated packaging material of the invention and/or comprising a laminated packaging material manufactured in the method of the invention.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 shows an embodiment of a packaging container for liquid food products;
Fig. 2 shows an embodiment of a laminated packaging material for packaging of liquid food products in a cross-sectional view and makes reference to a respective manufacturing method; and
Fig. 3 shows different embodiments of a laminated packaging material by alternative variants of a slit.

### Detailed description

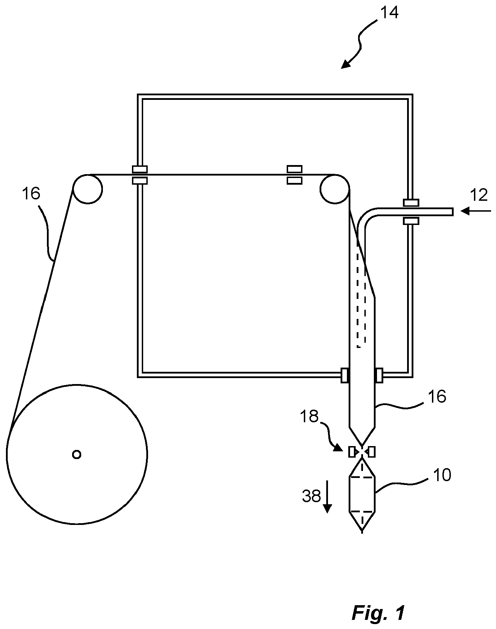

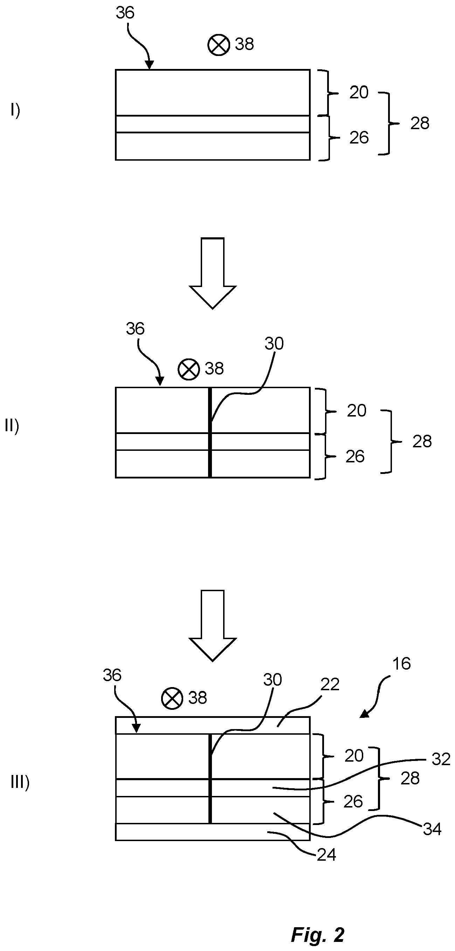

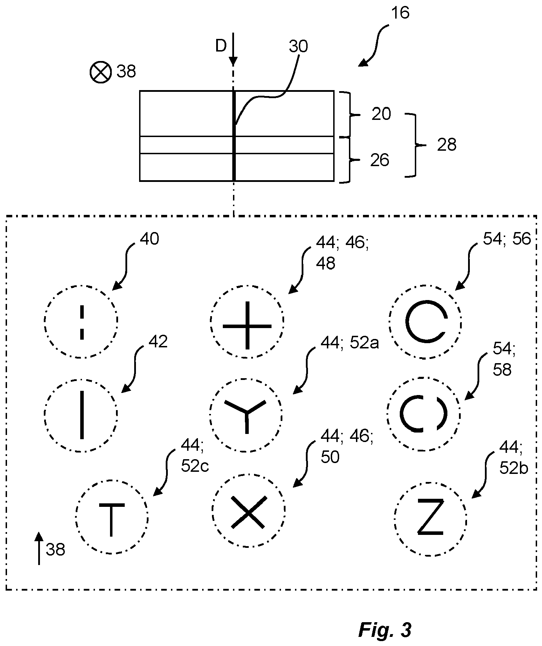

With reference to Fig. 1 an embodiment of an inventive packaging container 10 for a liquid food product 12 is illustrated. For example, a not further specified package producing machine 14 may deliver an inventive laminated packaging material 16 (see Figs. 2 and 3), from which the inventive packaging container 10 can be made. The inventive packaging container 10 can exemplarily be made by filling in the liquid food product 12 and then cutting off and sealing the inventive laminated packaging material 16 by a respective cutting and sealing means 18.

With reference to Fig. 2 an embodiment of an inventive laminated packaging material 16 for packaging of liquid food products 12 (shown in Fig. 1) is illustrated in a cross-sectional view. Said laminated packaging material 16 essentially comprises a bulk layer 20 of paper or paperboard or other cellulose-based material, a first, outermost liquid tight layer 22, arranged on the outside of the bulk layer 20 to constitute the outside of a packaging container 10 (shown in Fig. 1) formed from the packaging material 16, a second, innermost liquid tight layer 24 arranged on the inside of the bulk layer 20 to be in direct contact with the filled food product 12 (shown in Fig. 1), and an at least proportionately non-metal barrier film or sheet 26 being laminated between the bulk layer 20 and the second, innermost liquid tight layer 24, wherein the bulk layer 20 and the barrier film or sheet 26 together form a main layer 28.

According to the invention, the main layer 28 is provided with at least one slit 30 being covered at least by the second liquid tight layer 24. In the shown embodiment of Fig. 2 also the first liquid tight layer 22 is covering the slit. However, in some embodiments the first liquid tight layer 22 is applied prior to making the slit, such that the slit extends also through the first liquid tight layer 22.

It shall be noted that the slit 30 may extend partially or fully through the main layer 28, the latter being exemplarily shown in Fig. 2.

Further it shall be noted, that the at least proportionately non-metal barrier film or sheet 26 may completely consist of a non-metal material. In that case, it can be realized with a single layer made of a barrier material 32 not comprising any metal.

The first outermost liquid tight layer 22 and the second innermost liquid tight layer 24 are preferably but optionally heat sealable thermoplastic layers.

As exemplarily shown in Fig. 2, the at least proportionately non-metal barrier film or sheet 26 may also be embodied as a composite material and therefore comprise more than one layer, respectively. In the example of Fig. 2, the barrier film or sheet 26 comprises a substrate layer 34 being coated with the barrier material 32. In this case, the barrier material 32 may comprise a metal material, as the substrate layer 34 is made of a non-metal material. However, an amount of non-metal material should be very high relative the amount of metal material.

Merely as a preferred example, the substrate layer 34 is made of a non-metal material comprising a plastic, paper or cellulose-based material. Merely as a further preferred example, the barrier material 32 comprises Aluminum. However, a thickness of the barrier material 32 preferably measures only 60 nm in this example, whereas a thickness of the substrate layer 34 preferably measures 6 µm. Thus, in this example the amount of metal material does not exceed 1 vol% of the amount of non-metal material and is relatively very low for that reason.

The inventive laminated packaging material 16 can be manufactured in an inventive method, as indicated in Fig. 2.

In a first step I of said method, the bulk layer 20 is provided and the at least proportionately non-metal barrier film or sheet 26 is laminated to said bulk layer 20 such that the barrier film or sheet 26 and the bulk layer 20 are forming the main layer 28.

In a second step II, the main layer 28 is provided with the at least one slit 30, which is exemplarily created fully trough the main layer 28.

In a third step III, the first outermost liquid tight layer 22 is laminated on the outside of the bulk layer 20 to constitute the outside of a packaging container 10 formed from the packaging material 16, and the second innermost liquid tight layer 24 is laminated on the inside of the barrier film or sheet 26 to be in direct contact with the filled food product 12, such that the first liquid tight layer 22 and the second liquid tight layer 24 cover the slit 30 of the main layer 28.

In step I, it is preferred to laminate the barrier film or sheet 26 to the bulk layer 20 by extrusion lamination or wet lamination.

Prior to providing the main layer 28 with the at least one slit 30 in step II, it is preferred to print a decor layer 36 on the outside of the bulk layer 20. This may be done in step I or at the beginning of step II, for example.

For the creation of the slit 30 in step II, it is preferred to employ laser cutting, mechanical cutting or a combination thereof.

Now making additional reference to Fig. 3, different embodiments of the laminated packaging material 16 will be described in further detail, with particular focus on preferred variants of the slit 30.

For this purpose, a manufacturing direction 38 is defined and illustrated in Figs. 1, 2 and 3. The machine direction 38 refers to the fact that the laminated packaging material 16 is normally manufactured in a continuous process that has a material feed direction, which is the machine direction 38 in other words. Based on that, a longitudinal direction 38 of the laminated packaging material 16 is achieved, which is parallel the machine direction 38. As well known, parallel direction vectors can be shifted relative each other as long as they are still pointing in the same direction. Based on that, there will be no further difference made in the following description between the machine direction 38 and the longitudinal direction 38 and the same reference sign 38 is used to underline their equivalence.

The upper part of Fig. 3 shows the laminated packaging material 16, however without the first outermost liquid tight layer 22 and the second innermost liquid tight layer 24.

Different variants of the slit 30 are illustrated in the lower part of Fig. 3. The shown variants may be alternatives or used in any combination. The slits 30 are shown, according to detail D, in a view on the top of the main layer 28 in the upper part of Fig. 3, said view being projected to the lower part of Fig. 3.

In all the alternative embodiments shown in detail D, the slit 30 has been manufactured, for example in step II of the inventive method, in a way that the at least one slit 30 extends at least to some extent in the longitudinal direction 38 of the laminated packaging material 16. This is however optional.

In one embodiment, the slit 30 is formed by a perforation type of slit 40, preferably in a straight line. In another embodiment, the slit 30 is formed by a single straight line 42.

In another embodiment, the main layer 28 is provided with at least two intersecting slits 44. For example, said intersecting slits 44 may be in the form of a cross 46. For example, some of said slits 44 of the cross 46 may be angled relative the longitudinal extension 38 of the laminated packaging material 16, as shown in case of cross 48. In case of cross 48, only one slit 44 (shown horizontally) is angled relative the longitudinal extension 38. Further, all slits 44 of the cross 46 may be angled relative the longitudinal extension 38, as shown in case of cross 50

In yet other embodiments, the slits 44 may be formed in an Y-shape 52a, a Z-shape 52b, or a T-shape 52c.

Finally, in two other embodiments there are part-circle type of slits 54 provided. One of said embodiments has a slit 54 in the form of a single-interrupted circle 56. The other embodiment has a slit 54 in the form of a double-interrupted circle 58.

From the description above follows that, although various embodiments of the invention have been described and shown, the invention is not restricted thereto, but may also be embodied in other ways within the scope of the subject-matter defined in the following claims.

## Claims

1. A laminated packaging material (16) for packaging of liquid food products (12), comprising a bulk layer (20) of paper or paperboard or other cellulose-based material, a first outermost liquid tight layer (22), arranged on the outside of the bulk layer (20) to constitute the outside of a packaging container (10) formed from the packaging material (16), a second innermost liquid tight layer (24) arranged on the inside of the bulk layer (20) to be in direct contact with the filled food product (12), and an at least proportionately non-metal barrier film or sheet (26) being laminated between the bulk layer (20) and the second, innermost liquid tight layer (24), wherein the bulk layer (20) and the barrier film or sheet (26) together form a main layer (28), **characterized in that** the main layer (28) is provided with at least one slit (30) being covered at least by the second liquid tight layer (24).

2. The laminated packaging material (16) according to claim 1, wherein the slit (30) is covered by the first and second liquid tight layers (22; 24)

3. The laminated packaging material (16) according to claim 1 or 2, wherein the at least one slit (30) extends fully through the main layer (28).

4. The laminated packaging material (16) according to any of the preceding claims, wherein the barrier film or sheet (26) comprises a substrate layer (34) being coated with a barrier material (32).

5. The laminated packaging material (16) according to claim 4, wherein the substrate layer (34) is made of plastic or paper or a cellulose-based material.

6. The laminated packaging material (16) according to any of the preceding claims, wherein the main layer (28) is provided with at least two intersecting slits (30; 44).

7. The laminated packaging material (16) according to any of the preceding claims, wherein the slits (30; 44) are in the form of a cross (46).

8. The laminated packaging material (16) according to claim 7, wherein each slit (30; 44) of the cross (46; 50) is angled relative a longitudinal extension (38) of the laminated packaging material (16).

9. The laminated packaging material (16) according to claim 6, wherein the slits (44) are in the form of an Y (52).

10. The laminated packaging material (16) according to any of claims 1 to 5, wherein the slit (30) is in the form of a single straight line (42).

11. A method of manufacturing a laminated packaging material (16) for packaging of liquid food products (12), comprising:
- providing a bulk layer (20) of paper or paperboard or other cellulose-based material,
- laminating an at least proportionately non-metal barrier film or sheet (26) to said bulk layer (20) such that the barrier film or sheet (26) and the bulk layer (20) form a main layer (28),
- providing the main layer (28) with at least one slit (30), and
- laminating a first outermost liquid tight layer (22) on the outside of the bulk layer (20) to constitute the outside of a packaging container (10) formed from the packaging material (16), and
- laminating a second innermost liquid tight layer (24) on the inside of the barrier film or sheet (26) to be in direct contact with the filled food product (12), such that the second liquid tight layer (24) covers the at least one slit (30) of the main layer (28).

12. The method according to claim 11, wherein laminating the first outermost liquid tight layer (22) and the second innermost liquid tight layer (24) is performed such that the first outermost liquid tight layer (22) and the second innermost liquid tight layer (24) cover the at least one slit (30) of the main layer (28).

13. The method according to claim 11 or 12, wherein the step of laminating the barrier film or sheet (26) to the bulk layer (20) is performed by extrusion lamination or wet lamination.

14. The method according to any of claims 11 to 13, further comprising printing a decor layer (36) on the outside of the bulk layer (20) prior to providing the main layer (28) with the at least one slit (30).

15. The method according to any of claims 11 to 13, wherein the step of providing the main layer (28) with at least one slit (30) is performed by laser cutting, and/or by mechanical cutting.

16. The method according to any of claims 11 to 15, wherein the at least one slit (30) extends at least to some extent in the longitudinal direction (38) of the laminated packaging material (16).

17. A packaging container (10), comprising a laminated packaging material (16) as defined in any of claims 1 to 10 and/or manufactured in a method according to any of claims 11 to 16.
